# EUROPEAN PATENT APPLICATION

(11) **EP 1 752 975 A1**
(43) Date of publication of application: **14.02.2007**
(21) Application number: 06022224.7
(22) Date of filing: 10.01.2002
(51) Int. Cl.: G11B 7/0045, G11B 7/125, G11B 7/007

(54) **An optical power calibration method for calibrating the writing optical power of optical disk drive**

(30) Priority: 07.03.2001 CN 01110950; 07.03.2001 CN 01110949
(62) Divisional of application: 02715363.4
(71) Applicant: BENQ CORPORATION, Gueishan, Taoyung 333 Taiwan (CN)
(72) Inventor: Wang, Wai, Gueishan, Taoyuan 333 (TW); Yen, Mengshin, Gueishan, Taoyuan 333 (TW); Chen, Tsotsai, Gueishan, Taoyuan 333 (TW)
(74) Representative: Liesegang, Roland

(57) **Abstract**

The present invention discloses an optical power calibration method for calibrating a writing power of a compact disc drive. The compact disc drive has an access device for writing data onto the compact disc. The compact disc has a central portion, an inner power calibration area located outside the central portion, and outer power calibration area located outside the inner optical power calibration area for writing data. An outer power calibration area is set in the last possible lead-out area on the outer edge of the compact disc, and an optical power calibration area and an optical power calibration count area are also set in the outer power calibration. The access device is controlled to perform optical power calibration in the inner or the outer power calibration area and perform counting of optical power calibration in the inner or outer optical power calibration according to the position of the writing data in the abovementioned data storage area.

## Description

### BACKGROUND OF THE INVENTION

### 1. Field of the Invention

The present invention relates to an optical power calibration method performed by a compact disc drive, and a compact disc drive and a compact disc using the method, and more particularly, to an optical power calibration method where the optical power calibration is performed at the inner edge and the outer edge of a compact disc, and a compact disc drive and a compact disc using the method.

### 2. Description of the Prior Art

CD-R and CD-RW drives have been widely used as PC peripheral access devices. In general, such type of compact disc drive performs an optical power calibration process before writing data onto a compact disc (CD-R/CD-RW). The optical power calibration is to write specific information to a power calibration area (PCA) located at the inner edge of the compact disc in advance, and then read it back, thereby detect the characteristics of the compact disc, and determine a required writing optical power, so as to write data onto the compact disc correctly.

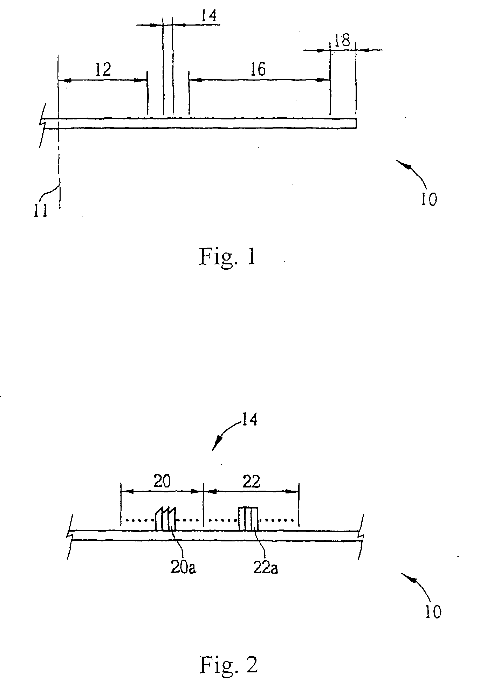

Fig.1 is a side view of a compact disc 10 according to the prior art. The prior art compact disc 10 is in the form of circular disk that is symmetrical about a centerline 11, its relative specification is given in an Orange Book of the compact disc industry criterion (Compact Disc Recordable System Description Version 3.1 December 1998). Generally, the compact disc 10 comprises a central portion 12, a power calibration area (PCA) 14 located outside the central portion 12 for performing optical power calibration, a data storage area 16 located outside the power calibration area 14 for writing data by the user, and a last possible lead-out area 18 located at the outer edge of the compact disc for recording the data ending information of compact disc 10. Before writing data onto the compact disc 10, the prior art compact disc drive performs optical power calibration in the power calibration area 14, so as to determine suitable optical power parameters. That is to say, the prior art compact disc drive uses properties such as surrounding and vibrational characteristics of the power calibration area 14 to simulate conditions within the whole data storage area 16 so as to find the appropriate writing power.

Nevertheless, the optical power calibration manner described above can not achieve the object of accurate calibration. Since the power calibration area 14 is located at the inner edge of the compact disc 10, a considerable portion of the data storage area 16 is located adjacent to the outer edge of the compact disc 10, and the surrounding and vibrational characteristics often have comparative differences between the inner and the outer edge of the compact disc 10, the prior art optical power calibration method is incapable of detecting an optimum writing power, thus resulting in a bad writing quality.

Fig.2 is a schematic diagram of the power calibration area 14 shown in Fig.1. The power calibration area 14 comprises a test area 20 for performing writing test, and a count area 22 for counting the number of times of writing test. According to the specification in the Orange Book, the test area 20 and the count area 22 are divided into 100 partitions 20a, 22a, respectively. Therefore, the optical power calibration can be performed only 100 times at most whether for CD-R or for CD-RW.

However, since at least one optical power calibration must be performed whenever a new writing operation is performed, the specification of power calibration area 14 prescribed in the abovementioned Orange Book is incapable of satisfying the demands of the users. In compact discs which can be written only once, such a specification sets limit to the case of writing small amount of data many times, and in compact discs which can be written repeatedly, it limits the number of times available for writing

### SUMMARY OF THE INVENTION

It is therefore an object of the present invention to provide an optical power calibration method, the method can control the access device to choose whether to perform the optical power calibration in the inner power calibration area or in the outer power calibration area according to the writing position of the data, so that the position to store the data in the data storage area and the position of the optical power calibration area are close to each other to the utmost extent, and a more suitable writing optical power is obtained.

It is another object of the present invention to provide a compact disc drive, the control device of the compact disc drive can control the access device to choose whether to perform the optical power calibration in the inner power calibration area or in the outer power calibration area according to the writing position of the data, so that the position to store the data in the data storage area and the position of the optical power calibration area are close to each other to the utmost extent, and a more suitable writing optical power is obtained.

It is yet another object of the present invention to provide a compact disc having inner and outer power calibration area.

In order to achieve the above objects, according to the first aspect of the present invention, an optical power calibration method for calibrating the writing power of a compact disc drive is provided, the compact disc drive comprising an access device for writing data onto a compact disc which comprises a central portion, an inner power calibration area located outside the central portion, a data storage area located outside the inner power calibration area for the user to write data, and an outer power calibration area located outside the data storage area, the method comprising steps of:
providing the data to be written; controlling the access device to perform optical power calibration in the outer power calibration area, so as to determine a writing power; and
controlling the access device to write the data to be written onto the data storage area according to the writing optical power.

In order to achieve the above objects, according to the second aspect of the present invention, a compact disc drive for writing data to be written onto a compact disc is provided, the compact disc comprising a central portion, an inner power calibration area located outside the central portion, a data storage area located outside the inner power calibration area for writing data, and an outer power calibration area located outside the data storage area, the compact disc drive comprising: an access device for writing data to be written onto the data storage area; and a control device for controlling the access device to perform an optical power calibration in the outer power calibration area to determine an optimized writing optical power, and writing the data to be written onto the data storage area according to the writing optical power.

In order to achieve the above objects, according to the third aspect of the present invention, a compact disc is provided, the compact disc comprises: a central portion; an inner power calibration area located outside the central portion; a data storage area located outside the inner power calibration area for the user to write data; and an outer power calibration area located outside the data storage area; wherein the outer power calibration area is used to for performing an optical power calibration to determine an writing power required to write data onto the compact disc.

In order to achieve the above objects, according to the fourth aspect of the present invention, the data storage area comprises an inner area and an outer area, when the writing location is located in the inner area, the control device controls the access device to perform the optical power calibration in the inner power calibration area, and when the writing location is located in the outer area, the control device controls the access device to perform the optical power calibration in the outer power calibration area.

In order to achieve the above objects, according to the fifth aspect of the present invention, setting certain specific portion on the data storage area as a predetermined portion; determining a writing location of the data in the data storage area; controlling the access device to perform an optical power calibration process in the outer power calibration area when the writing location is located within the predetermined portion; and determining the required writing power according to the result of optical power calibration, and controlling the access device to write the data onto the compact disc.

In order to achieve the above objects, according to the sixth aspect of the present invention, the predetermined portion is the data storage area between a predetermined position in the data storage area and the outer power calibration area; and the steps of performing optical power calibration in the method further comprising the step of: controlling the access device to perform an optical power calibration process in the inner power calibration area when the writing location is located out of the predetermined portion.

In order to achieve the above objects, according to the seventh aspect of the present invention, the optical power calibration method counts the number of times of the optical power calibration already performed, the control device controls the access device to perform the optical power calibration in the inner power calibration area when the number of times of the optical power calibrations already performed has not exceeded a predetermined number of times, and the control device controls the access device to perform the optical power calibration in the outer power calibration area when the number of times of the optical power calibrations already performed has exceeded a predetermined number of times.

In order to achieve the above objects, according to the eighth aspect of the present invention, each of the inner and outer power calibration area comprises a test area for performing writing optical power test, and a count area for counting the number of times of writing test, respectively.

### BRIEF DESCRIPTION OF THE DRAWINGS

In order to make the objects, features and advantages of the present invention more apparent, the embodiments of the present invention will be described in conjunction with the accompanying drawings. Wherein, each accompanying drawing is described as follow:
Fig.1 is a side view of a compact disc according to the prior art;
Fig.2 is a schematic diagram showing the configuration of a Power Calibration area according to the prior art as shown in Fig.1;
Fig.3 is a schematic diagram showing the configuration of a compact disc drive and a compact disc according to the present invention;
Fig.4 is a schematic diagram showing the controlling manner in an embodiment of the compact disc drive according to the present invention as shown in Fig.3;
Fig.5 is a flow chart showing the optical power calibration method of an embodiment according to the present invention;
Fig.6 is a schematic diagram showing the controlling manner in another embodiment of the compact disc drive according to the present invention;
Fig.7 is a flow chart showing a method of the optical power calibration of the embodiment according to the present invention as shown in Fig.6;
Fig.8 is a schematic diagram showing the optical power calibration and counting performed in a last possible lead-out area by the compact disc drive according to the present invention as shown in Fig.3;
Fig.9 is a flow chart showing a method of the optical power calibration and counting according to the present invention.

### DETAILED DESCRIPTION OF THE PREFERRED EMBODIMENT

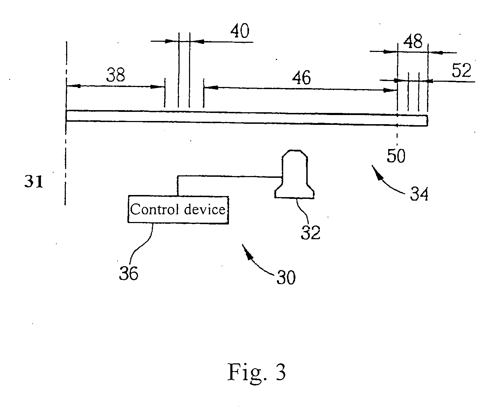

Please refer to Fig.3. Fig.3 is a schematic diagram of a compact disc drive 30 according to the present invention. The compact disc drive 30 comprises an access device 32 for writing data onto the compact disc 34, and a control device 36 for controlling the operation of the compact disc drive 30. The control device 36 controls the access device 32 to perform optical power calibration, and to write data on the compact disc 34 according to the calibration result.

As shown in Fig.3, the compact disc 34 sequentially comprises, from the center toward the outer edge, a central portion 38, an inner power calibration area 40 for optical power calibration, a data storage area 46 for writing data to be stored by the user, and a last possible lead-out area 48 for recording the ending information about the data on the compact disc 34. According to the specification prescribed in the abovementioned Orange Book, the most outside area of each compact disc must remain an appropriate length for recording the ending information about the data, the area is the last possible lead-out area 48 of a compact disc. In the present invention, the inner power calibration area 40 can provide one hundred times of optical power calibration, and the last possible lead-out area 48 comprises an outer power calibration area 52 which is also used for power calibration.

According to the specification prescribed in the Orange Book, the length of the last possible lead-out area 48 must be at least longer than one minute and thirty seconds (01:30:00), some manufacturers even supply compact discs with a last possible lead-out area of 1 minute and 50 seconds (01:50:00). Generally, 15 frames are required to perform each optical power calibration. Thus 1,500 frames are required to perform the optical power calibration 100 times, which corresponds to 20 seconds (00:20:00). Hence, as long as enough length of the last possible lead-out area 48 is reserved for storing the data ending information, the rest can be set as the outer power calibration area 52 for optical power calibration. In the embodiment, the outer power calibration area 52 is located from one minute (01:00:00) to one minute and twenty second (01:20:00) after a last possible start time 50. In addition, a corresponding test area and count area are set in each of the inner power calibration area 40 and outer power calibration area 52, which are used to perform writing test and counting the number of times of writing test respectively.

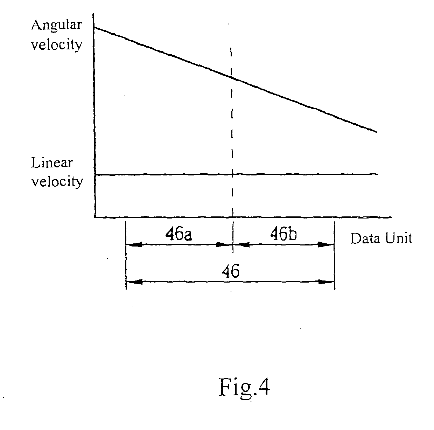

Please refer to Fig.4. Fig.4 is a schematic diagram for controlling manner of the compact disc drive 30 shown in Fig.3. In the embodiment, the compact disc drive 30 controls the rotation of the compact disc 34 in a constant linear velocity (CLV) manner. As shown in Fig.4, the rotating speed of the compact disc 34 is controlled in a constant linear velocity manner such that the data units at different locations on tracks of the compact disc 34 have the same linear velocity while passing through the access device 32. At this time, from the point of view of a rotate speed (angular velocity) of the compact disc 34, the rotating speed of the compact disc 34 will be faster when writing onto data units near the center of the compact disc 34, and the rotate speed of the compact disc 34 will be slower when writing onto data units near the outside area of the compact disc 34.

The compact disc drive 30 can choose according to a writing location of the data whether the inner power calibration area 40 or the outer power calibration area 52 is to be used to perform an optical power calibration. As shown in Fig.4, the embodiment divides the data storage area 46 into an inner area 46a and an outer area 46b. When writing data, the control device 36 determines a writing location for the data in the data storage area 46. The compact disc drive 30 performs the optical power calibration in the inner power calibration area 40 shown in Fig.3 when the writing location is located within the inner area 46a, the compact disc drive 30 performs the optical power calibration in the outer power calibration area 52 when the writing location is located within the outer area 46b,.

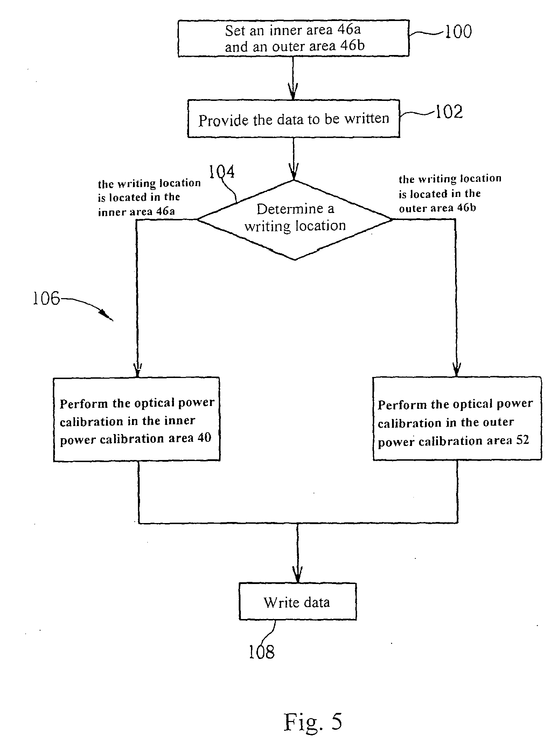

Please refer to Fig.5. Fig.5 is a flow chart of an optical power calibration method of the embodiment. The optical power calibration method of the embodiment is performed in the following steps:
- step 100:: dividing the data storage area 46 into an inner area 46a and an outer area 46b;
- step 102:: providing the data to be written;
- step 104:: determining a writing location of the data in the data storage area 46;
- step 106:: controlling the access device 32 to perform an optical power calibration process in either the inner power calibration area 40 or the outer power calibration area 52 according to the writing location, wherein, the optical power calibration is performed in the inner power calibration area 40 when the writing location is located in the inner area 46a, the optical power calibration is performed in the outer power calibration area 52 when the writing location is located in the outer area 46b; and
- step 108:: determining a required writing optical power according to the result of optical power calibration, and controlling the access device 32 to write the data onto the compact disc 34.

According to the steps described above, since the inner area 46a is adjacent to the inner power calibration area 40, and the outer area 46b is adjacent to the outer power calibration area 52, the surrounding and vibrational characteristics of the inner area 46a and the outer area 46b are close to that of the inner power calibration area 40 and the outer power calibration area 52 respectively. Therefore, the optical power calibration method according to the present invention can more precisely predict an exact optimum writing power in the data storage area 46 to enhance the writing quality.

In addition, the above embodiment is described by way of the example in a controlling manner of constant linear velocity, however, in the compact disc drive by using a controlling manner of constant angular velocity (CAV), the manner described in the present invention is also applicable, that is, dividing the data storage area 46 into an inner area 46a and an outer area 46b, and performing power calibration in different power calibration area 40, 52, so as to achieve more accurate calibration result.

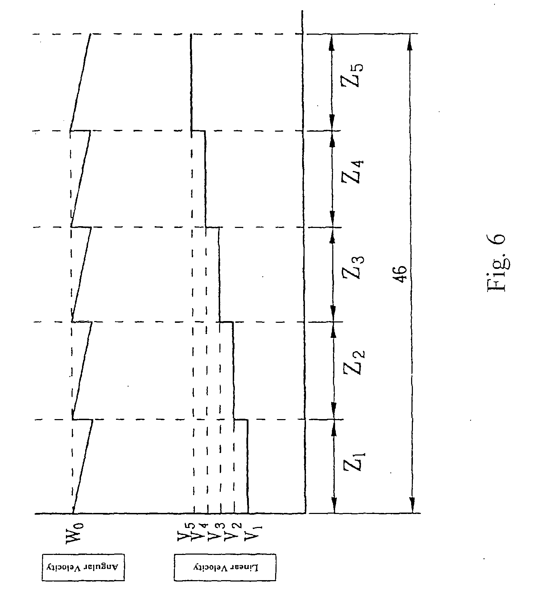

Please refer to Fig.6. Fig.6 is a schematic diagram of another embodiment of the present invention. Different from the previously embodiment, the compact disc drive 30 does not employ a controlling manner of constant linear velocity or constant angular velocity, but controls the rotation of the compact disc 34 in a multi-segment linear velocity manner instead. As shown in Fig.6, in such a controlling manner, the data storage area 46 of the compact disc 34 is divided, from the inside to the outside, into five data segments Z₁, Z₂, Z₃, Z₄ and Z₅, the compact disc drive 30 controls the rotation of the compact disc 34 in each segment of the data segments Z₁, Z₂, Z₃, Z₄ and Z₅ respectively in a constant linear velocity (CLV) manner, and the linear velocities of the data segments Z₁, Z₂, Z₃, Z₄ and Z₅ are different, which are V₁, V₂, V₃, V₄, V₅ respectively, but the initial angular velocity of each segment of the data segments Z₁, Z₂, Z₃, Z₄ and Z₅ is about the same, which is approximately W₀.

In this embodiment, the control device 36 determines whether the inner or the outer power calibration area 40, 52 is to be used according to the data segment Z₁, Z₂, Z₃, Z₄, or Z₅ in which a writing location for data to be written into the data storage area 46 is located. When the writing location is within the inner three data segments Z₁, Z₂, and Z₃, the compact disc drive 30 performs the optical power calibration in the inner power calibration area 40, when the writing location is within the outer two data segments Z4 and Z5, the compact disc 30 performs the optical power calibration in the outer power calibration area 52.

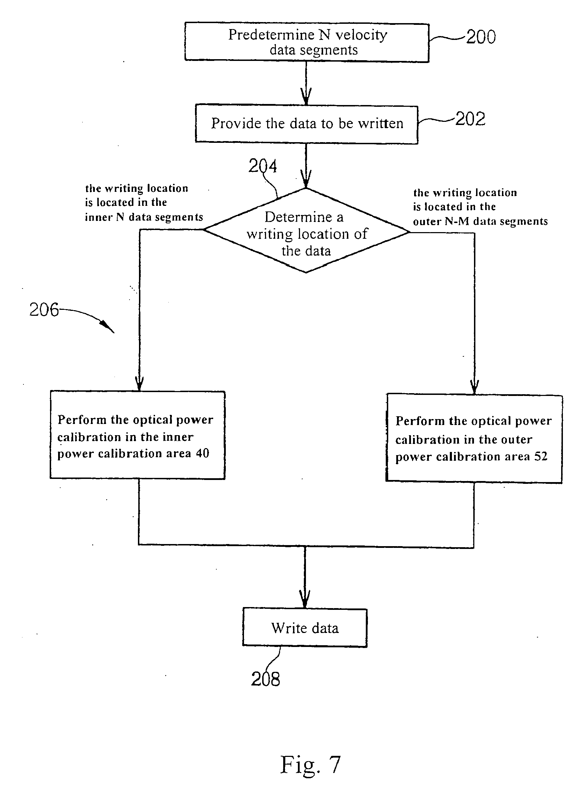

Please refer to Fig.7. Fig.7 is a flow chart of an optical power calibration method of the embodiment shown in Fig.6. The optical power calibration method of the embodiment shown in Fig.6 can be performed in the following steps:
- step 200:: predetermining N data segments Z₁ to Z_{N} for controlling in a multi-segment linear velocity manner;
- step 202:: providing the data to be written;

- step 204:: determining a writing location of the data in the data storage area 46;
- step 206:: controlling the access device 32 to perform an optical power calibration process in either the inner power calibration area 40 or the outer power calibration area 52 according to the writing location, wherein, when the writing location is located in the inner M (M<N) data segments, the optical power calibration is performed in the inner power calibration area, when the writing location is located in the outer N-M data segments, the optical power calibration is performed in the outer power calibration area 52;
- step 208:: determining a required writing optical power according to the result of optical power calibration, and controlling the access device 32 to write the data onto the compact disc 34.

Wherein, the value of M can be about a half of the value of N, naturally, the values of M and N can also be freely chosen by the designer depending on relative factors. As long as choosing suitable power calibration area according to the writing location, it complies with the spirit of the present invention.

In contrast to the prior art, the optical power calibration method according to the present invention chooses one of the inner and the outer power calibration area 40, 52 according to the writing location of the data to perform the optical power calibration. Therefore, an exact writing power for the data storage area 46 can be predicted precisely so as to enhance the writing quality.

The present invention can choose one of the inner and the outer power calibration areas 40 and 52 according to the writing location of the data to perform the optical power calibration so as to precisely predict the exact writing power for the data storage area 46. Moreover, the present invention is more advantageous than the prior art in that, the present invention not only can perform optical power calibration with one part of segment of the inner and outer optical power calibration areas 40 and 52, but also can count the number of times of writing test with another part of segment of the inner and outer optical power calibration area 40 and 52.

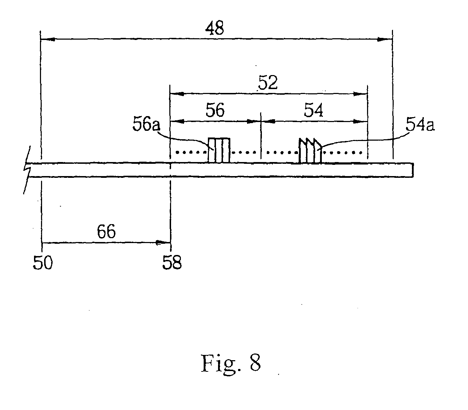

Next, the case of performing optical power calibration and counting in the segment of the outer optical power calibration area 52 of the last possible lead-out area will be explained with reference to Fig.8.

Fig.8 is a schematic diagram of performing the optical power calibration in the last possible lead-out area 48 by the compact disc drive 30 shown in Fig. 3. As described in the part of background of the invention, a conventional compact disc drive can perform optical power calibration only in the inner power calibration area 40. However, in the present invention, the compact disc drive 30 can also perform optical power calibration in the last possible lead-out area 48 located at the outer edge of the compact disc 34. As shown in Fig.8, according to the present invention, an outer power calibration area 52 is defined in the last possible lead-out area 48 for optical power calibration.

As shown in Fig 3, the compact disc 34 comprises a last possible lead-out area 48. Further as shown in Fig.8, the last possible lead-out area 48 comprises an outer power calibration area 52, the outer power calibration area 52 comprises a calibration or test area 54 for performing writing calibration or test, and a count area 56 for counting the number of times of the writing calibrations or tests. In the embodiment, the test area 54 and the count area 56 are divided into 100 partitions 54a, 56a, respectively, but it is not limited to this in practice. Further, it is well known for those skilled in the art how to perform optical power calibration by using the test area 54 and the count area 56, and thus the detailed description will be omitted here.

Typically, 15 frames are necessary for performing each optical power calibration. Therefore, 1500 frames are necessary for performing 100 optical power calibrations, which corresponds to 20 seconds (00:20:00). According to the specification prescribed in the Orange Book, the length of the last possible lead-out area 48 of a compact disc should be at least 1 minute and 30 seconds (01:30:00), some manufacturers even supply the compact discs with the length of the last possible lead-out area up to 1 minute and 50 seconds (01:50:00) which is much longer than the 20 seconds. Hence, as long as enough length of the last possible lead-out area 48 is reserved for recording the data ending information, the rest can be used for optical power calibration. As shown in Fig.8, a predetermined length separation 66 is disposed between the starting point 58 of the outer power calibration area 52 and the starting point of the last possible lead-out area 48 (that is, the last possible start time 50). The predetermined length separation 66 is set as 1 minute (01:00:00), which is long enough for recording the data ending message. The length of the outer edge power calibration area 52 thereafter is 20 seconds (00:20:00), which is long enough for performing optical power calibration 100 times.

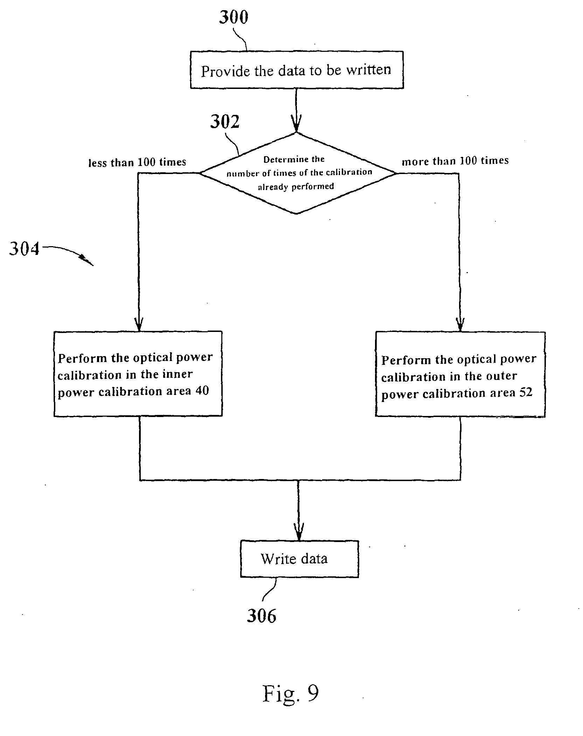

Please refer to Fig.9. Fig.9 is a flow chart of an optical power calibration and counting method according to the present invention. The optical power calibration method according to the present invention can be performed in the following steps:
- Step 300:: providing the data to be written;
- Step 302:: determining the number of times of optical power calibrations that have been performed on the compact disc 34;
- Step 304:: controlling the access device 32 to perform the optical power calibration in the inner power calibration area 40 in Fig.3 when the number of times of performing optical power calibrations is less than 100, and perform the optical power calibration in the outer power calibration area 52 when the number of times of performing optical power calibrations is more than 100; and
- Step 306:: determining the required writing power according to the calibration result, and controlling the access device 32 to write the data to the compact disc 34.

Furthermore, in the above steps, optical power calibration is performed in the inner power calibration area 40 first, and then in the outer power calibration area 52, certainly, the optical power calibration can be implemented in an inverted order, or be performed in inner or outer power calibration area 40, 52 arbitrarily. Further, the length of the above mentioned outer power calibration area 52 and the relative position between the outer power calibration area 52 and the last possible lead-out area 48 are illustrative only, in fact, as long as the set up of the outer power calibration area 52 does not obstruct the function of the last possible lead-out area 48 for recording data ending information, the aforementioned effect of the present invention can be achieved in a considerable extent.

In contrast to the prior art, the optical power calibration method according to the present invention performs optical power calibration in the outer power calibration area 52 in addition to the conventional inner power calibration area 40, so that more calibrations may be performed than the conventional power calibration method, and the versatile demands when the user is writing to a compact disc can be satisfied.

The above descriptions are only the preferred embodiments of the present invention, the equivalent changes and modifications to the scope defined by the claims of the present invention are all covered by the present invention patent.

## Claims

1. An optical power calibration method for calibrating the writing power of a compact disc drive (30), the compact disc drive comprising an access device (32) for writing data onto a compact disc (34), the compact disc (34) comprising a central portion (38), an inner power calibration area (40) located outside the central portion (38), a data storage area (46) located outside the inner power calibration area (40) for the user to write data, and an outer power calibration area (52) located outside the data storage area (46), the method comprising steps of:
providing the data to be written;
controlling the access device (32) to perform optical power calibration in the outer power calibration area (52), so as to determine a writing optical power; and
controlling the access device (32) to write the data to be written onto the data storage area (46) according to the writing optical power,
wherein the compact disc further comprises a last possible lead-out area (48) located at an outer edge of the compact disc (34) for recording the ending information of the data on the compact disc,
**characterized in that** a starting point (58) of the outer power calibration area (52) and a starting point (50) of the last possible lead-out area (48) are disposed with a predetermined length separation (66).

2. The optical power calibration method of claim 1 wherein the predetermined length separation (66) is long enough for recording the data ending message of the compact disc.

3. The optical power calibration method according to claim 1 or 2, wherein the outer power calibration area (52) further comprises a test area for performing writing test, and a count area for counting the number of times of writing test.

4. The optical power calibration method according to one of the preceding claims, wherein the method further comprises steps of:
determining the number of times of the optical power calibrations already performed on the optical disc (34); and
performing the optical power calibration in the inner power calibration area (40) when the number of times of the optical power calibrations already performed has not exceeded a predetermined number of times, and performing the optical power calibration in the outer power calibration area (52) when the number of times of the optical power calibrations already performed has exceeded a predetermined number of times.

5. The optical power calibration method according to claim 4, wherein the predetermined number of times is the number of times of optical power calibration capable of being performed in the inner power calibration area (40).

6. The optical power calibration method according to one of the preceding claims, wherein the method further comprises steps of:
setting certain specific portion on the data storage area (46) as a predetermined portion;
determining a writing location of the data in the data storage area (46);
controlling the access device (32) to perform an optical power calibration process in the outer power calibration area (52) when the writing location is located within the predetermined portion; and
determining the required writing power according to the result of optical power calibration, and controlling the access device (32) to write the data onto the compact disc (34).

7. The optical power calibration method according to claim 6, wherein
the predetermined portion is the data storage area (46) between a predetermined position in the data storage area and the outer power calibration area (52); and
the steps of performing optical power calibration in the method further comprising the step of:
controlling the access device (32) to perform an optical power calibration process in the inner power calibration area (40) when the writing location is located out of the predetermined portion.

8. The optical power calibration method according to one of the preceding claims, wherein the data storage area (46) comprises N data segments, and the steps of performing optical power calibration in the method further comprises the steps of:
controlling the access device (32) to perform the optical power calibration process in the inner power calibration area (40) when the writing location is located in inner M (M<N) data segments, and controlling the access device (32) to perform the optical power calibration process in the outer power calibration area (52) when the writing location is located in outer N-M data segments.

9. A compact disc drive for writing data to be written onto a compact disc (34), the compact disc (34) comprising a central portion (38), an inner power calibration area (40) located outside the central portion (38), a data storage area (46) located outside the inner power calibration area (40) for writing data, and an outer power calibration area (52) located outside the data storage area (46), the compact disc drive (30) comprising:
an access device (32) for writing data to be written onto the data storage area (46); and
a control device (36) for controlling the access device (32) to perform an optical power calibration in the outer power calibration area (52) to determine an writing power, and
writing the data to be written onto the data storage area (46) according to the writing power,
wherein the compact disc (34) further comprises a last possible lead-out area (48) located at an outer edge of the compact disc (34) for recording the ending information of the data on the compact disc (34),
**characterized in that** the starting point (58) of the outer power calibration area (52) and the starting point (50) of the last possible lead-out area (48) are disposed with a predetermined length separation (66) and the control device is adapted to control the access device to perform the outer optical calibration in the outer optical calibration area outside the starting point of the last possible lead-out area.

10. The compact disc drive of claim 9, wherein the predetermined length separation (66) is long enough for recording the data ending message of the compact disc.

11. The compact disc drive according to claim 9 or 10, wherein that the outer power calibration area (52) further comprises a test area for performing writing test, and a count area for counting the number of times of writing test.

12. The compact disc drive according to one of the claims 9 to 11, wherein the control device (36) is adapted to control the access device (32) to perform the optical power calibration in the inner power calibration area (40) when the number of times of the optical power calibrations already performed has not exceeded a predetermined number of times, and the control device (36) controls the access device (32) to perform the optical power calibration in the outer power calibration area (52) when the number of times of the optical power calibrations already performed has exceeded a predetermined number of times.

13. The compact disc drive according to claim 12, wherein the predetermined number of times is the number of times of optical power calibration capable of being performed in the inner power calibration area (40).

14. The compact disc drive according to one of claims 9 to 13, wherein the data storage area (46) comprises an inner area (46a) and an outer area (46b), when the writing location is located in the inner area, the control device (36) controls the access device (32) to perform the optical power calibration in the inner power calibration area (40), and when the writing location is located in the outer area, the control device (36) controls the access device (32) to perform the optical power calibration in the outer power calibration area (52).

15. The compact disc drive according to one of claims 9 to 14, wherein the data storage area comprises N data segments, and when the writing location is located in inner M (M<N) data segments, the control device (36) controls the access device (32) to perform the optical power calibration process in the inner power calibration area (40), and when the writing location is located in outer N-M data segments, the control device (36) controls the access device (32) to perform the optical power calibration process in the outer power calibration area (52).

16. A compact disc comprising:
a central portion (38);
an inner power calibration area (40) located outside the central portion (38);
a data storage area (46) located outside the inner power calibration area (40) for the user to write data; and
an outer power calibration area (52) located outside the data storage area (46);
wherein the outer power calibration area (52) is used for performing an optical power calibration to determine an writing power required to write data onto the compact disc (34), and
further comprising a last possible lead-out area (48) located at the outer edge of the compact disc (34) for recording the ending information of the data on the compact disc (34),
**characterized in that** the starting point (58) of the outer power calibration area (52) and the starting point (50) of the last possible lead-out area are disposed with a predetermined length separation (66).

17. The compact disc of claim 16, wherein the predetermined length separation (66) is long enough for recording the data ending message of the compact disc.

18. The compact disc according to claim 16 or 17, wherein the predetermined length separation (66) is about 1 minute (01:00:00).

19. The compact disc according to one of claims 16 to 18, wherein the length of the outer power calibration area is about 20 seconds (00:20:00).

20. The compact disc according to one of claims 16 to 19, wherein the outer power calibration area (52) further comprises a test area for performing writing test, and a count area for counting the number of times of writing test.
